Europäisches Patentamt

European Patent Office

Office européen des brevets

(19)

(11) EP 0 872 752 A1

(12) DEMANDE DE BREVET EUROPEEN

(43) Date de publication:
21.10.1998 Bulletin 1998/43

(51) Int Cl.⁶: G02B 23/02, G01B 9/02

(21) Numéro de dépôt: 98400703.9

(22) Date de dépôt: 26.03.1998

(84) Etats contractants désignés:
AT BE CH DE DK ES FI FR GB GR IE IT LI LU MC
NL PT SE
Etats d'extension désignés:
AL LT LV MK RO SI

(30) Priorité: 18.04.1997 FR 9704812

(71) Demandeur: AEROSPATIALE SOCIETE
NATIONALE INDUSTRIELLE
75016 Paris (FR)

(72) Inventeurs:
• Viard, Thierry
  06210 Mandelieu (FR)
• Fargant, Guy
  06560 Valbonne (FR)
• Vakili, Farrokh
  06740 Chateauneuf De Grasse (FR)

(74) Mandataire: Bonnetat, Christian
CABINET BONNETAT
29, rue de St. Pétersbourg
75008 Paris (FR)

(54) Système de télescope interférmométrique

(57)    -Système de télescope interférométrique dans lequel au moins deux faisceaux polychromes (5, 6) provenant ensemble d'un même objet céleste interfèrent et forment plusieurs taches d'Airy dans le plan focal (4) dudit système.

-   Selon l'invention, le système de télescope est caractérisé :

    .   en ce qu'il comporte un disperseur de lumière (dans 14) séparant celle-ci en fonction de la longueur d'onde et disposé sur le trajet desdits faisceaux polychromes au voisinage dudit plan focal (4) ; et

.   en ce que ledit disperseur de lumière arrange, dans ledit plan focal (4), lesdites taches d'Airy monochromes de façon au moins approximativement adjacente en un alignement de direction parallèle à celle de leurs franges d'interférence.

FIG.1

# Description

La présente invention concerne un système de télescope interférométrique avec un champ de vue à deux dimensions, destiné à des mesures d'astrométrie, notamment globale. Quoique non exclusivement, elle est particulièrement adaptée aux mesures astrométriques du programme GAIA (Global Astrometric Interferometer for Astrophysics) de l'Agence Spatiale Européenne.

On sait qu'un système de télescope interférométrique connu de ce type fait interférer au moins deux faisceaux polychromes provenant ensemble de la même étoile et forme dans son plan focal une tache d'Airy polychrome enfermant des franges d'interférence. Pour former lesdits faisceaux polychromes, un tel système peut comporter autant de télescopes que de faisceaux ou bien un seul télescope à l'entrée duquel est placé un masque percé de trous dont le nombre correspond à celui desdits faisceaux. Par ailleurs, dans le cas d'un télescope de type Fizeau à masque, on sait que le pas des franges d'interférence des taches d'Airy est inversement proportionnel à la distance des axes desdits faisceaux polychromes à l'entrée dans ledit système, distance qui est généralement appelée "base".

Pour pouvoir mesurer et exploiter, dans plusieurs bandes spectrales différentes (par exemple au nombre de six), la tache d'Airy polychrome ainsi engendrée par un tel système de télescope interférométrique connu, on dispose, dans le plan focal de celui-ci, un nombre égal de matrices électroniques (par exemple de type CCD), chacune équipée d'un filtre correspondant à une bande spectrale prédéfinie. Ainsi, lorsque le système de télescope interférométrique balaye l'espace, l'image d'une étoile dans le plan focal (tache d'Airy) passe successivement sur les différents filtres, ce qui permet d'obtenir successivement les informations spectrales.

Une telle disposition présente des inconvénients importants.

Tout d'abord, puisqu'elle consiste à séparer dans le champ de vue du système les différents domaines spectraux, elle impose de grandes dimensions pour le champ de vue utile et pour le plan focal dudit système. Par exemple, dans le cas d'utilisation de six bandes spectrales, comme dans le programme GAIA, le plan focal doit comporter six types de matrices électroniques et ne peut donc pas présenter une aire inférieure à 40 cm x 40 cm. Une telle disposition ne peut donc être utilisée que pour des systèmes de télescope interférométriques complexes et encombrants. Cependant, même avec de tels systèmes, cette disposition rend la construction de ceux-ci difficilement faisable.

Par ailleurs, dans un tel système de télescope interférométrique connu, chaque couple filtre-matrice voit, à un instant donné, une zone de l'espace différente de celles vues par les autres couples, puisque sa position dans le plan focal est différente de celles de ces derniers. Les images instantanées données par lesdites matrices sont donc différentes, non seulement parce qu'elles sont associées à des couleurs différentes, mais encore parce qu'elles ne concernent pas exactement le même objet céleste.

La présente invention a pour objet de remédier à ces inconvénients et de permettre la réalisation d'un système de télescope interférométrique simple et peu encombrant, avec un champ de vue et un plan focal relativement faibles et avec lequel les différentes images monochromes instantanées correspondent exactement au même objet céleste.

A cette fin, selon l'invention, le système de télescope interférométrique dans lequel interfèrent au moins deux faisceaux polychromes provenant ensemble d'un même objet céleste, est remarquable en ce qu'il comporte un disperseur de lumière séparant celle-ci en fonction de la longueur d'onde et disposé sur le trajet desdits faisceaux polychromes au voisinage du plan focal dudit système, de sorte que, dans ledit plan focal, se forment plusieurs taches d'Airy, dont chacune d'elles correspond à une des couleurs desdits faisceaux polychromes, et en ce que ledit disperseur de lumière, utilisé sur un champ de vue à deux dimensions, arrange lesdites taches d'Airy monochromes dans ledit plan focal de façon au moins approximativement adjacente en un alignement de direction parallèle à celle des franges d'interférence desdites taches d'Airy monochromes.

Ainsi, grâce à la présente invention, il n'est plus nécessaire de disposer dans ledit plan focal autant de lots de matrices électroniques que de bandes spectrales étudiées ; au contraire, dans le système de l'invention, une seule matrice électronique est suffisante. Le champ de vue et le plan focal du système de l'invention sont donc beaucoup plus petits que ceux des systèmes connus. Si l'on compare le système de l'invention à l'exemple connu mentionné ci-dessus d'un système dont le plan focal comporte six types de matrices et a une aire d'au moins 40 cm x 40 cm, on constate que le nombre des matrices est divisé par 6 et qu'il en est donc de même pour l'aire du plan focal, qui peut être maintenant de 16 cm x 16 cm.

La présente invention permet donc, d'une part, d'augmenter considérablement la faisabilité d'un tel système de télescope interférométrique et, d'autre part, d'utiliser un télescope simple et peu encombrant, par exemple du type Cassegrain, qui présente un champ de vue assez faible (donc incompatible avec un grand plan focal) . La possibilité d'utilisation d'un tel télescope est d'autant plus avantageuse qu'il présente peu d'aberrations et qu'il dispose d'un correcteur focal dioptrique pouvant également corriger l'astigmatisme éventuel dudit disperseur.

Par ailleurs, il est évident que la présente invention permet une prise d'image instantanée dans toutes les bandes spectrales, ce que ne peut permettre la technique antérieure, comme cela a été rappelé ci-dessus.

De plus, on remarquera que, grâce à la présente invention, l'énergie d'une étoile, captée par le système de télescope interférométrique, est entièrement récupérée par le plan focal --au coefficient de transmission près dudit système-- sans problème d'ordre de diffraction ou d'efficacité, contrairement aux systèmes connus.

En ce qui concerne la dispersion des taches d'Airy monochromes dans le plan focal, prévue par la présente invention, on notera :

- que son amplitude est suffisamment grande pour pouvoir séparer chaque bande spectrale des autres, mais suffisamment faible pour qu'il n'y ait aucune possibilité de confusion entre des taches d'Airy appartenant à des étoiles différentes ; et
- que sa direction est parallèle aux franges d'interférence, c'est-à-dire orthogonale à la base du système, de sorte que la direction perpendiculaire auxdites franges d'interférence n'est pas touchée. Il en résulte que la dimension interférométrique intéressante, qui nécessite une haute résolution spatiale et qui correspond au pas desdites franges d'interférence, n'est pas modifiée par ladite dispersion.

Il en résulte que la figure d'interférence concernant une étoile est parfaitement fiable et lisible dans le sens des interfranges, tout en délivrant les informations spectrales liées à ladite étoile. Ainsi, la matrice électronique disposée dans le plan focal du système est alors apte à délivrer la position, l'information interférométrique et l'information spectrale de chaque étoile vue par le système.

De préférence, ledit disperseur de lumière est de type dioptrique. Il peut comprendre deux lames prismatiques accolées par leurs faces obliques et formant ensemble une lame à faces parallèles comportant un dioptre plan oblique entre lesdites faces parallèles.

Avantageusement, lesdites lames prismatiques ont des indices de réfraction égaux pour une longueur d'onde au moins approximativement médiane dans la gamme des longueurs d'onde correspondant auxdites taches d'Airy et ont des constringences aussi différentes que possible pour les longueurs d'ondes extrêmes de ladite gamme. Par exemple, lesdites lames prismatiques sont respectivement réalisées en verres PSK53A et FN11.

Afin de corriger les aberrations optiques dudit disperseur, on peut associer un jeu de lentilles optiques appropriées à celui-ci. Dans le cas où ledit système interférométrique comporte un correcteur focal pour corriger ses propres aberrations optiques, il est avantageux que l'ensemble dudit disperseur de lumière et de son jeu de lentilles correctrices associées soit incorporé audit correcteur focal, avec adaptation de ce dernier pour prendre en compte l'interaction optique entre ledit correcteur focal et ledit disperseur.

Ledit jeu de lentilles correctrices peut comporter une lentille avec une face plane confondue avec le plan focal dudit système.

Les figures du dessin annexé feront bien comprendre comment l'invention peut être réalisée. Sur ces figures, des références identiques désignent des éléments semblables.

La figure 1 illustre schématiquement un télescope interférométrique à deux miroirs, perfectionné conformément à la présente invention.

La figure 2 illustre le principe d'un exemple de réalisation schématique du disperseur conforme à la présente invention.

La figure 3 montre les variations, en fonction de la longueur d'onde, des indices de réfraction des lames prismatiques constituant le disperseur de la figure 2.

La figure 4 illustre un ensemble de taches d'Airy monochromes relatives à une même étoile.

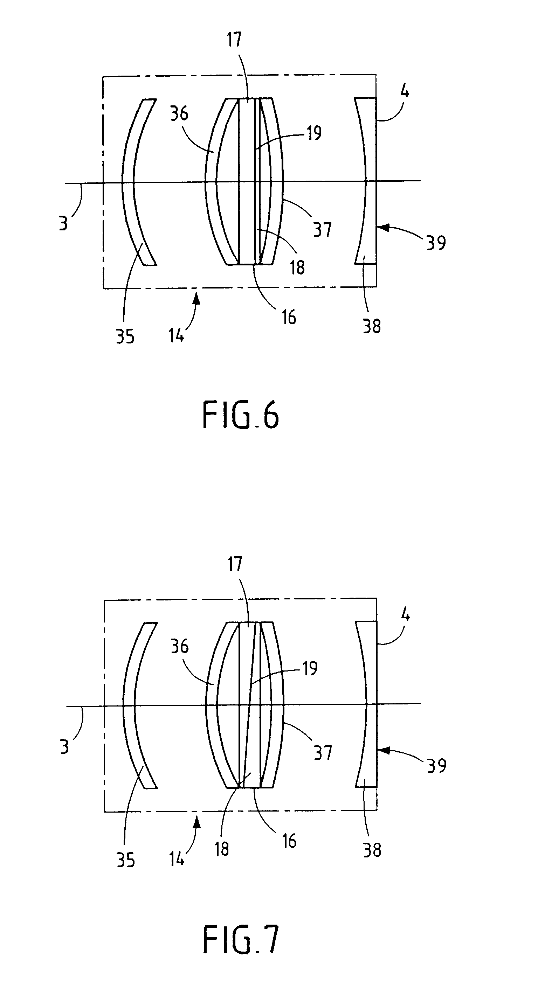

La figure 5 illustre schématiquement la matrice électronique disposée dans le plan focal du télescope interférométrique, avec trois ensembles de taches d'Airy.

Les figures 6 et 7 sont deux vues d'un mode de réalisation pratique du disperseur conforme à la présente invention, respectivement selon une direction orthogonale au plan contenant la base et l'axe optique du télescope et une direction parallèle à ladite base.

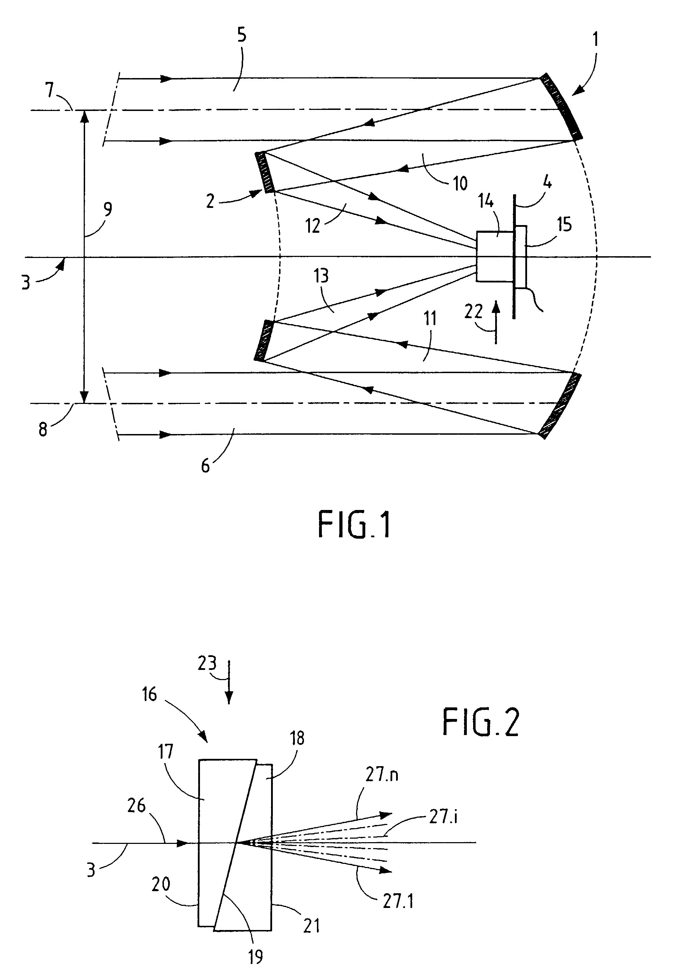

Le télescope interférométrique illustré schématiquement sur la figure 1, par exemple du type Cassegrain, comporte de façon connue un miroir concave 1 et un miroir convexe 2 en regard, centrés sur un axe 3 et déterminant un plan focal 4.

Le miroir concave 1 reçoit d'un objet céleste (non représenté), notamment une étoile, deux faisceaux polychromes 5 et 6, qui sont parallèles entre eux et dont chacun d'eux est formé de rayons parallèles. Les axes respectifs 7 et 8 desdits faisceaux 5 et 6 sont distants de la base 9.

Par réflexion sur le miroir concave 1, lesdits faisceaux 5 et 6 sont renvoyés sur le miroir convexe 2, sous la forme de faisceaux convergents 10 et 11, respectivement. Ledit miroir convexe 2 réfléchit à son tour lesdits faisceaux convergents 10 et 11 sous la forme d'autres faisceaux 12 et 13, respectivement, convergeant sur le plan focal 4.

Conformément à la présente invention, le télescope interférométrique de la figure 1 comporte un dispositif optique 14, disposé sur le trajet des faisceaux convergents 12 et 13 au voisinage du plan focal 4 et apte à séparer et à disperser les lumières monochromes contenues dans la lumière polychrome de ceux-ci, en fonction de leurs longueurs d'onde.

Par ailleurs, le télescope interférométrique comporte une ou plusieurs matrices électroniques 15, par exemple de type CCD, apte à observer et à mesurer les images formées dans le plan focal 4.

L'élément principal du dispositif optique 14 est le disperseur optique 16 montré par la figure 2. Ce disperseur 16 est constitué de deux lames prismatiques 17 et 18, accolées, et même collées, l'une à l'autre par leurs faces obliques formant le dioptre plan 19, incliné par rapport à l'axe optique 3 du télescope. Par ailleurs, les autres faces 20 et 21 desdites lames, respectivement opposées au dioptre plan incliné 18, sont parallèles entre elles et orthogonales audit axe 3. Par suite, le disperseur 15 est constitué par une lame parallèle à l'intérieur de laquelle se trouve le dioptre plan incliné 19. On notera que le disperseur optique 16 est vu sur la figure 2 selon la direction 22 parallèle à la base 9 (voir la figure 1), tandis que sur la figure 1, dans le cas où le dispositif 14 serait transparent, ledit disperseur optique 16 serait vu selon une direction 23 de la figure 2, orthogonale au plan contenant la direction 22 et la base 9 (et donc l'axe 3).

Les indices de réfraction n17 et n18 des lames prismatiques 17 et 18, respectivement, sont des fonctions de la longueur d'onde de la lumière polychrome que reçoivent ces dernières. Ci-après, on suppose, à titre d'exemple, que le télescope interférométrique a pour mission d'étudier six bandes de longueurs d'onde autour de longueurs d'ondes λ1 à λ6, respectivement, en provenance d'un objet céleste.

Les lames prismatiques 17 et 18 sont réalisées en des verres, par exemple ceux connus sous les références PSK53A et FN11, qui ont le même indice de réfraction no pour une longueur d'onde λo au moins approximativement médiane dans la gamme des longueurs d'ondes λ1 à λ6 étudiées par le télescope et qui, pour les longueurs d'ondes extrêmes λ1 et λ6 de ladite gamme, ont les constringences les plus différentes possibles, c'est-à-dire pour lesquelles

$$\frac{n17(\lambda o)}{n17(\lambda 1) - n17(\lambda 6)} \text{ est très différente de}$$

$$\frac{n18(\lambda o)}{n18(\lambda 1) - n18(\lambda 6)}$$

De plus, les verres constitutifs des lames 17 et 18 sont choisis pour pouvoir être obtenus facilement et être spatialisables, dans le cas où le télescope doit lui-même être monté à bord d'un satellite.

Dans l'exemple ci-dessus, les longueurs d'ondes λ1, λo et λ6 sont au moins approximativement égales à 400 nm, 600 nm et 800 nm, respectivement.

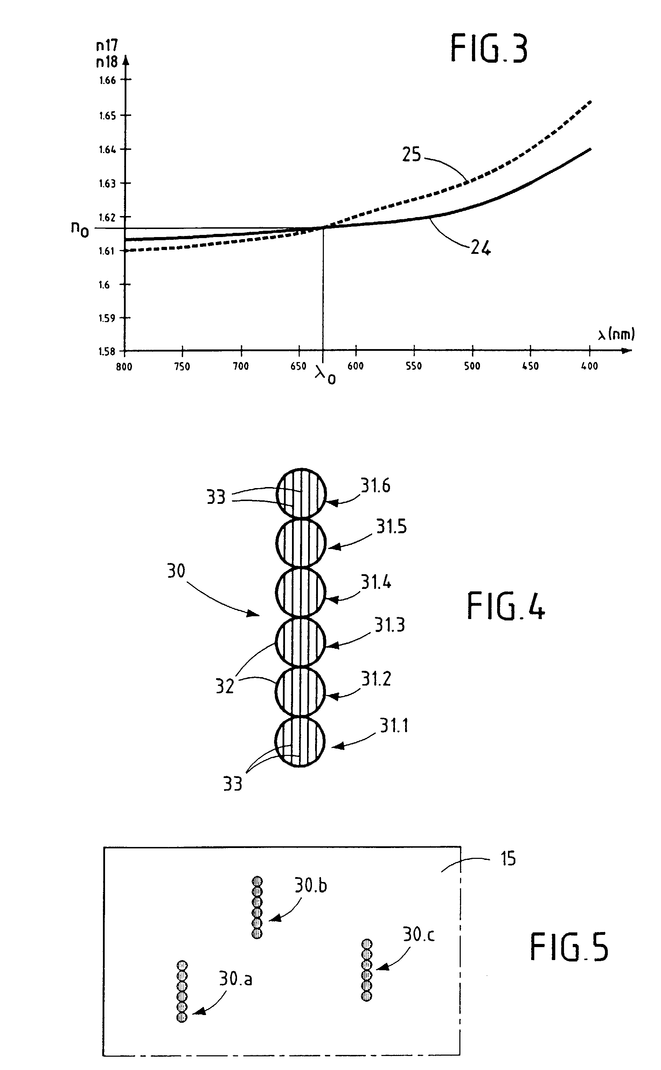

Sur la figure 3, les courbes 24 et 25 illustrent, schématiquement, un exemple des variations des indices de réfraction n17 et n18 en fonction de la longueur d'onde λ.

Ainsi (voir la figure 2), lorsqu'un faisceau polychrome incident 26, parallèle à l'axe optique 3, frappe la face plane orthogonale 20 du disperseur 16, il est dispersé par le dioptre oblique 19 et la face 21 en autant de faisceaux dispersés 27.1, ..., 27.i, ..., 27.n qu'il y a de couleurs monochromes dans le faisceau incident. De plus, chaque faisceau dispersé 27i, correspondant à une longueur d'onde λi, a une orientation fixe et forme donc sur un plan orthogonal à l'axe optique 3, par exemple le plan focal 4, une tache dont l'emplacement lui est spécifique.

Par suite, si on considère les six longueurs d'onde λ1 à λ6, parmi les n que contiennent les faisceaux 5 et 6, on trouvera les six taches d'Airy correspondantes 31.1 à 31.6 à des emplacements distincts du plan focal 4, lesdites taches d'Airy formant un ensemble 30, associé à un objet céleste particulier (voir la figure 4).

Ces taches d'Airy 31.1 à 31.6 comportent une enveloppe 32 et des franges d'interférence 33 et sont alignées par le disperseur 16 parallèlement auxdites franges. De plus, la dispersion obtenue par le disperseur 16 est réglée pour que lesdites taches d'Airy 31.1 à 31.6 soient au moins approximativement adjacentes.

Ainsi, sur la matrice électronique 15, chaque objet céleste a, b ou c observé par le télescope de la figure 1 engendre un ensemble de taches d'Airy 30.a, 30.b ou 30.c correspondant, sur lequel il est possible d'effectuer les mesures d'astrométrie désirées.

Afin de corriger les aberrations optiques du disperseur 16, le dispositif optique 14 peut comporter de plus des lentilles correctrices 35, 36, 37, 38. Si le télescope nécessite un correcteur focal, lesdites lentilles correctrices et ledit disperseur sont incorporés audit correcteur focal, qui est adapté en conséquence.

Une des lentilles correctrices 38 peut comporter une face plane 39 confondue avec ledit plan focal 4 du système.

**Revendications**

1. Système de télescope interférométrique dans lequel interfèrent au moins deux faisceaux polychromes (5, 6) provenant ensemble d'un même objet céleste,
   caractérisé :

   - en ce qu'il comporte un disperseur de lumière (16) séparant celle-ci en fonction de la longueur d'onde et disposé sur le trajet desdits faisceaux polychromes au voisinage du plan focal (4) dudit système, de sorte que, dans ledit plan focal, se forment plusieurs taches d'Airy (31.1 à 31.6), dont chacune d'elles correspond à une des couleurs desdits faisceaux polychromes ; et
   - en ce que ledit disperseur de lumière (16), utilisé sur un champ de vue à deux dimensions, arrange lesdites taches d'Airy monochromes (31.1 à 31.6) dans ledit plan focal de façon au moins approximativement adjacente en un alignement de direction parallèle à celle des franges d'interférence (33) desdites taches d'Airy monochromes.

2. Système selon la revendication 1,
   caractérisé en ce que ledit disperseur de lumière (16) est de type dioptrique.

3. Système selon la revendication 2,
   caractérisé en ce que ledit disperseur de lumière (16) comprend deux lames prismatiques (17, 18) accolées par leurs faces obliques et formant ensemble une lame à faces parallèles (20, 21) comportant un dioptre plan oblique (19) entre lesdites faces.

4. Système selon la revendication 3,
   caractérisé en ce que lesdites lames prismatiques (17, 18) ont des indices de réfraction ($n_{17}$, $n_{18}$) égaux pour une longueur d'onde ($\lambda_o$) au moins approximativement médiane dans la gamme des longueurs d'onde ($\lambda_1 - \lambda_6$) correspondant auxdites taches d'Airy et ont des constringences aussi différentes que possible pour les longueurs d'ondes extrêmes ($\lambda_1$, $\lambda_6$) de ladite gamme.

5. Système selon l'une des revendications 2 à 4,
   caractérisé en ce que lesdites lames prismatiques (17, 18) sont respectivement réalisées en verres PSK53A et FN11.

6. Système selon l'une des revendications précédentes,
   caractérisé en ce qu'il comporte un jeu de lentilles optiques (35 à 38) associées audit disperseur de lumière (16) pour corriger les aberrations optiques engendrées par ledit disperseur (16).

7. Système selon la revendication 6, d'un type dans lequel un correcteur focal est nécessaire pour corriger ses propres aberrations optiques,
   caractérisé en ce que l'ensemble dudit disperseur de lumière et de son jeu de lentilles correctrices associées est incorporé audit correcteur focal, avec adaptation de ce dernier pour prendre en compte l'interaction optique entre ledit correcteur focal et ledit disperseur.

8. Système selon l'une des revendications 6 ou 7,
   caractérisé en ce que ledit jeu de lentilles correctrices (35 à 38) comporte une lentille (38) avec une face plane (39) confondue avec ledit plan focal.

9. Système selon l'une quelconque des revendications 1 à 8,
   caractérisé en ce qu'il est de type Cassegrain.

FIG.1

FIG.2

FIG.3

FIG.4

FIG.5

FIG.6

FIG.7

**Office européen des brevets**

# RAPPORT DE RECHERCHE EUROPEENNE

Numero de la demande

EP 98 40 0703

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int.Cl.6) |
|---|---|---|---|
| A | US 5 108 168 A (NORBERT MASSIE A ET AL) 28 avril 1992<br>* abrégé; figures 1,4-6,8 *<br>* colonne 3, ligne 56 - colonne 4, ligne 6 * | 1,9 | G02B23/02<br>G01B9/02 |
| A | US 5 317 389 A (HOCHBERG ERIC B ET AL) 31 mai 1994<br>* abrégé; figure 1 *<br>* colonne 2, ligne 34 - ligne 49 *<br>* colonne 5, ligne 45 - ligne 65 * | 1,2 | |
| A | US 4 215 273 A (KOCH NORMAN G ET AL) 29 juillet 1980<br>* abrégé; figures 1,2 *<br>* colonne 2, ligne 38 - colonne 66 *<br>* colonne 5, ligne 9 - ligne 24 * | 1,2,6,7 | |
| A | K. H. ELLIOT: "A novel zoom-lens spectrograph for a small astronomical telescope"<br>MONTHLY NOTICE OF THE ROYAL ASTRONOMICAL SOCIETY,<br>no. 281, 1 juillet 1996,<br>pages 158-162, XP002051341<br>* abrégé; figure 1 *<br>* page 1, alinéa 2 * | 1,9 | DOMAINES TECHNIQUES RECHERCHES (Int.Cl.6)<br><br>G02B |

Le présent rapport a été établi pour toutes les revendications

| Lieu de la recherche | Date d'achèvement de la recherche | Examinateur |
|---|---|---|
| LA HAYE | 8 juillet 1998 | Jakober, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)